# EUROPÄISCHE PATENTSCHRIFT

(11) **EP 3 409 149 B1**
(45) Veröffentlichungstag und Bekanntmachung des Hinweises auf die Patenterteilung: **17.08.2022**
(21) Anmeldenummer: 18171967.5
(22) Anmeldetag: 14.05.2018
(51) Int. Cl.: A47J 31/42, A47J 31/00, A47J 31/52

(54) **KAFFEEAUTOMAT MIT EINER STEUEREINRICHTUNG ZUR EINSTELLUNG VON GETRÄNKEPARAMETERN**
COFFEE MACHINE WITH CONTROL UNIT FOR SETTING BEVERAGE PARAMETERS
MACHINE À CAFÉ AUTOMATIQUE AVEC UN DISPOSITIF DE COMMANDE POUR RÉGLER DES PARAMÈTRES DE BOISSON

(30) Priorität: 31.05.2017 DE 102017111859
(43) Veröffentlichungstag der Anmeldung: 05.12.2018
(73) Patentinhaber: Miele & Cie. KG, 33332 Gütersloh (DE)
(72) Erfinder: Tembaak, Jutta, 49492 Westerkappeln (DE)

(56) Entgegenhaltungen:
- EP-A1- 2 279 683
- EP-A1- 2 392 239
- EP-B1- 2 624 733
- CH-A5- 679 978
- US-A1- 2016 192 806

## Beschreibung

Die Erfindung betrifft einen Kaffeeautomaten nach dem Oberbegriff des unabhängigen Anspruchs 1.

Die Bedienung von Haushaltsgeräten, insbesondere Kaffeeautomaten oder dergleichen, erfolgt herkömmlich über Bedienhandlungen am jeweiligen Gerät selbst. Zur erleichterten Bedienung ist es zum Beispiel bei Kaffeeautomaten bekannt, dass das Gerät für einen jeweiligen Benutzer spezifische Daten speichert und diese abrufbar vorhält. Auf diese Weise kann zum Beispiel bei Kaffeeautomaten ein sogenanntes Genießerprofil erstellt werden, in die Mischungsverhältnisse und/oder Zutaten für ein jeweiliges Getränk spezifiziert sind, so dass bei Abruf des Getränks an dem Kaffeeautomaten durch denjenigen Benutzer, der dieses Profil angelegt hatte oder für den dieses Profil angelegt wurde, eine Zubereitung des jeweiligen Getränks nach dessen Wünschen erfolgt. Solche Benutzer- oder Genießerprofile können grundsätzlich über Bedienhandlungen am jeweiligen Haushaltsgerät abgerufen werden. Zum erleichterten Abruf eines solchen Benutzerprofils ist in der DE 10 2006 032 707 A bereits vorgeschlagen, dass der Benutzer zum Aufruf eines Benutzerprofils seinen Fingerabdruck verwenden kann. Der Aufruf des Benutzerprofils soll sich damit auf eine einzige Bedienhandlung, nämlich das Auflegen eines Fingers des Benutzers auf einen sogenannten Fingerprintsensor, reduzieren. Hierbei sind jedoch der geschmacklichen Möglichkeiten Grenzen gesetzt, weil der Brühprozess selbst nicht individuell beeinflussbar ist.

Aus der EP 1 700 549 B1 ist ein Kaffeeautomat bekannt, der zwei Bohnenbehälter für verschiedene Bohnensorten umfasst. Mittels einer Bedienhandhabe kann der Benutzer das Mischungsverhältnis und damit die jeweiligen Anteile für das der Brüheinheit zugeführte

Kaffeepulver manuell einstellen. Aus der EP-B-2624733 ist ein Kaffeeautomat nach dem Oberbegriff des unabhängigen Anspruchs 1 bekannt. Z

Der Erfindung liegt somit die Aufgabe zu Grunde, einen Kaffeeautomaten bereitzustellen, welcher dem Benutzer auf einfache Weise erlaubt, Getränkeeigenschaften, wie Geschmackseigenschaften oder psychotrope Wirkungen, optimal einzustellen. Erfindungsgemäß wird unter anderem diese Aufgabe durch einen Kaffeeautomaten mit den Merkmalen des unabhängigen Anspruchs 1 gelöst.

Der Vorteil der Erfindung besteht darin, dass nicht nur verschiedene Kaffeebohnen zur aufzubrühenden Trockensubstanz gemischt werden, sondern eine Mischung herzustellen, die zwar einen individuell angepassten Koffeingehalt hat, die aber den vorgegebenen Geschmack aufweist. Das bedeutet, dass in jedem Vorratsbehälter eine Bohnensorte eingefüllt ist, die sich von der Bohnensorte im anderen Vorratsbehälter unterscheidet. Dabei ist eine der Bohnensorten eine koffeinfreie Sorte. Somit kann der Anwender nach persönlicher Tagesform den Koffeingehalt unterschiedlich stark einstellen, ohne wiederrum die Bitterkeit zu verändern oder im anderen Fall bei einem gleichbleibenden Koffeingehalt den Geschmack zu verändern. Ein Aspekt gilt es dabei zu beachten, dass unterschiedliche Kaffeesorten unterschiedlichen Koffeingehalt mit einer unterschiedlichen Bitterkeit haben, sodass die Kaffeesorten im richtigen Verhältnis gemischt werden müssen, damit vor allem auch die gesamte Mahlmenge, also die Menge der Trockensubstanz, und der Geschmack annähernd die vordefinierten Eigenschaften aufweisen.

Hierzu umfasst die Steuereinrichtung die Zuordnungseinheit, welche wie folgt eingerichtet ist:
- eine vorgegebene Gesamtmenge Trockensubstanz festzulegen;
- einen ersten Anteil für die Zugabe einer ersten Bohnensorte festzulegen;
- einen zweiten Anteil für die Zugabe einer zweiten Bohnensorte festzulegen;
wobei die Zuordnungseinheit derart eingerichtet oder programmiert ist, dass sich der erste Anteil und der zweite Anteil in Abhängigkeit der vorgegebenen spezifischen Getränkeparameter des konfigurierten Getränks ergibt, um das Zuführen der Bohnen in der Menge entsprechend ihres jeweils festgelegten Anteils in die Brühkammer zu bewirken.

Der Benutzer kann somit die Getränkeparameter als Ziel vorgeben, wie das fertige Getränk schmecken und welchen Koffeingehalt es aufweisen soll. Die Einstellung des Mischungsverhältnisses für die Zuführung der einzelnen, unterschiedlichen Bohnensorten erfolgt danach automatisch durch die Steuereinrichtung bzw. der in der Steuereinrichtung implementierten Zuordnungseinheit. Damit wird erreicht, dass der Benutzer auf einfache Weise den Geschmack und/oder den Koffeingehalt bei Beibehaltung des vorgegebenen Geschmacks individuell einstellen kann oder den Koffeingehalt individuell verändern kann unter Beibehaltung einer vorgegebenen Geschmacksrichtung.

In einer vorteilhaften Ausführung umfasst das Zuführungsmittel ein jeweils den Vorratsbehältern zugeordnetes, steuerbares Verschlussmittel an den jeweiligen Auslässen. Die Auslässe münden dabei in einen Schacht, der die Trockensubstanz in die Brühkammer fördert. Bei der Bevorratung von Kaffeebohnen werden die Kaffeebohnen nach dem Passieren der Verschlussmittel einem Mahlwerk zugeführt, wo sie gemahlen werden, wobei anschließend das Pulver als Trockensubstanz der Brühkammer zugeführt wird.

In einer anderen Ausführung umfasst das Zuführungsmittel ein jeweils den Vorratsbehältern zugeordnetes, steuerbares Mahlwerk. Somit werden Bohnen aus jeweils einem Behälter nur so lange gemahlen, bis die vorgegebene Menge erreicht ist. Anschließend können Bohnen aus einem anderen Behälter, in dem sich eine andere, von der ersten unterschiedlichen Bohnensorte befindet, gemahlen und der Brüheinheit zugeführt werden.

In einer insgesamt vorteilhaften Ausführung ist für jede Bohnensorte ein Mahlgrad festgelegt, da der Mahlgrad die Bitterkeit stark beeinflusst. Bevorzugt wird dabei ein für jede der verwendeten Bohnensorte optimierter Mahlgrad festgelegt bzw. voreingestellt. Der Mahlgrad wird dabei automatisch von der Steuereinrichtung eingestellt oder verändert. In einer bevorzugten Ausführung ist dabei der Mahlgrad in Abhängigkeit der vorgegebenen spezifischen Getränkeparameter für jede der zuzuführenden Bohnensorte jeweils individuell veränderbar. Damit sind sehr spezielle Beeinflussungen hinsichtlich der Geschmacksentfaltung des Kaffeepulvers möglich. Dies wird unter anderem dadurch erreicht, dass für die verschiedenen Vorratsbehälter bzw. den darin eingefüllten Kaffeesorten jeweils ein individueller Mahlgrad eingestellt oder verändert werden kann.

Erfindungsgemäß sind die Bohnenparameter in einem Initialisierungsmodus einstellbar und im Speicher abspeicherbar. Das bedeutet, dass der Anwender nach dem Einfüllen einer neuen Bohnensorte die bohnenspezifischen Geschmacksparameter, den Koffeingehalt und Stärke, also einen Wert der die Eigenschaft "Kräftig" bis "Mild" repräsentiert, und den empfohlenen Mahlgrad, beispielsweise einen Wert 4 für fein bis 0 für grob, eingeben kann. Diese gespeicherten Eigenschaften werden dann zur Zubereitung des Getränks zu Grunde gelegt. Die Einstellung der bohnenspezifischen Geschmacksparameter wird dabei bevorzugt für alle Vorratsbehälter durchgeführt.

Bevorzugt sind die spezifischen Bohnenparameter Koffeingehalt, Säure, Bitterkeit und Körperfülle und Mahlgrad als Kennzahl im Speicher abgelegt.

In einer weiteren, insgesamt zweckmäßigen Ausführung sind die Getränkeparameter in einem Konfigurationsmodus vor einem Getränkebezug festlegbar. Das bedeutet, dass dem Benutzer auf einem Bedienfeld ein Getränk mit vordefinierten Geschmackseigenschaften angeboten werden. Weiterhin ist als Weiterbildung die Möglichkeit bereitgestellt, die Getränkeeigenschaften und damit die Getränkeparameter zu verändern und die veränderten Parameter abzuspeichern, mit denen mittels der Zuordnungseinheit die Auswahl der Anteile verschiedener Bohnensorten aus den Vorratsbehältern zum nachfolgenden Zubereiten des Getränks erfolgt.

Die Getränkeparameter beinhalten unter anderem ein Maß für Gesamtmenge, Coffein, Stärke, Bitter, Sauer und/oder Körperfülle des fertigen Getränks. Das bedeutet, dass der Anwender seine Wünsche plakativ der Steuereinrichtung mitteilen kann, beispielsweise Koffeingehalt 50 %, bitterer Geschmack, wobei das Mischen und das Einstellen des jeweils für diesen Getränkewunsch optimalen Mahlgrades die Steuereinrichtung bzw. die Zuordnungseinheit der Steuereinrichtung übernimmt. Damit wird der Bedienkomfort stark verbessert, weil der Benutzer die sensorischen Eigenschaften definiert, ohne dass er genaue Kenntnisse über die Eigenschaften der bevorrateten Bohnensorten haben muss.

In einer insgesamt vorteilhaften Ausführung der Erfindung umfasst der Kaffeeautomat drei oder mehrere Vorratsbehälter, wobei für jeden der Vorratsbehälter jeweils spezifische Bohnenparameter einstellbar und abspeicherbar sind, die zur Herstellung eines mittels Getränkeparametern konfigurierten Getränks dienen. Damit wird die Auswahl an Geschmacksnuancen erheblich erweitert, wenn drei oder mehr unterschiedliche Bohnensorten in die Behälter gefüllt werden. Bei drei Behältern ist es beispielsweise sinnvoll, in einen Behälter eine koffeinfreie Sorte einzufüllen, in den zweiten eine säuerlich schmeckende, wie Arabica, und in den dritten eine bitter schmeckende, beispielsweise Robusta, einzufüllen und für die Getränkezubereitung zu verwenden. Nun kann nach der Geschmacksauswahl und Koffeingehaltauswahl die Zuordnungseinheit aus zwei verschiedenen Behältern oder aus allen drei Behältern jeweils nahezu zu beliebigen Einzelanteilen kombinieren.

In einer weiteren, insgesamt zweckmäßigen Ausführung umfasst der Speicher der Steuereinrichtung eine Tabelle, welche die Bohnenparameter und die dazugehörigen Vorratsbehälter bezeichnet, eine weitere Tabelle mit zumindest den ausgewählten Getränkeparametern, wobei die durch die Zuordnungseinheit vorgenommene Auswahl der einzelnen Vorratsbehälter mit Hilfe einer Zuordnungstabelle oder eines mathematischen Modells erfolgt, um die so bereitgestellte Auswahl zur nachfolgenden Getränkezubereitung zu verwenden. Die Parametertabelle, die Zuordnungstabelle und/oder das mathematische Modell können zweckmäßigerweise auch Bestandteil der Zuordnungseinheit sein. Das mathematische Modell ist zweckmäßigerweise eine Formel oder eine Beschreibung für eine Rechenoperation, um anhand der Eingangsgrößen Getränkeparameter und Bohnenparameter die Bohnenanteile und den jeweils zum Getränkeparameter entsprechenden Mahlgrad zu berechnen. Dies ist bevorzugt als Computerprogramm im Speicher der Steuereinrichtung hinterlegt, wobei die Steuereinrichtung zur Ausführung des Computerprogramms einen Mikrocontroller enthält.

Ein Ausführungsbeispiel der Erfindung ist in den Zeichnungen rein schematisch dargestellt und wird nachfolgend näher beschrieben. Es zeigen
- Fig. 1: einen Kaffeeautomaten in einer teilweisen transparenten Darstellung;
- Fig. 2: die Vorratsbehälter mit der Zuordnungseinheit als Detail;
- Fig. 3: Ansicht eines Menues der Bedienvorrichtung;
- Fig. 4:: eine Ansicht eines weiteren Menues der Bedienvorrichtung und
- Fig. 5:: einen Ablauf einer Zuordnung (schematisch).

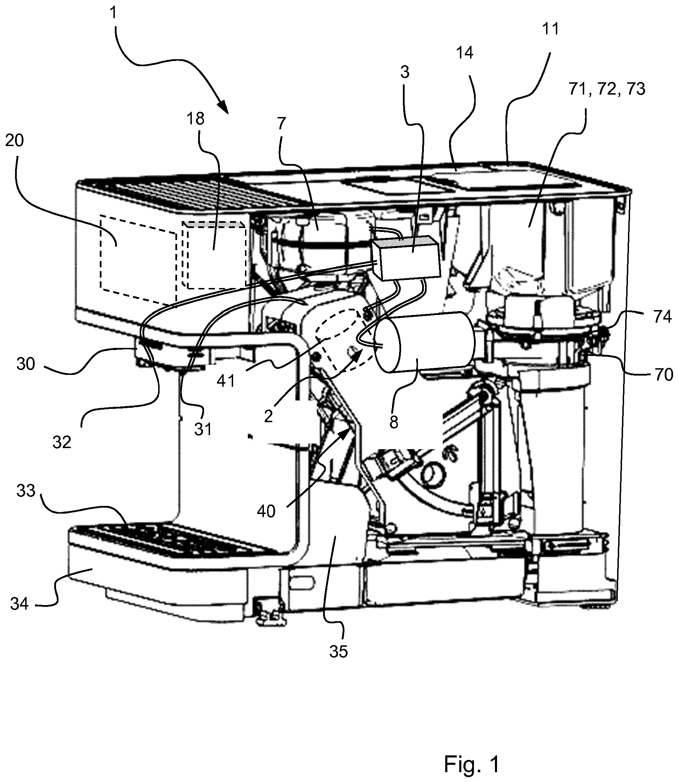

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem eine Anordnung von mehreren, hier drei, Vorratsbehältern 71, 72, 73 für Kaffeebohnen mit darunter angebrachtem, motorbetriebenen Mahlwerk 70, den Wasserbehälter 14 sowie das Strömungsleitungssystem 2 untergebracht ist. Im Frontbereich des Heißgetränkebereiters 1 verfügt dieser über einen höhenbeweglichen Auslass 30, in dem mehrere Entnahmeeinrichtungen, hier Auslassdüsen 31, 32 untergebracht sind. Bei der Entnahmeeinrichtung 32 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf dem Abtropfblech 33 abgestellten Trinkgefäßes angepasst werden kann, ohne dass bei der Abgabe des Getränkes ein Verspritzen erfolgt. Das Abtropfblech 33 ist vorzugsweise mit Öffnungen und/oder Schlitzen versehen, um Flüssigkeitsreste in einer unterhalb des Abtropfbleches 33 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile der Ventilanordnung 3 und Heizeinrichtung 7 und Mahlwerk 70 zu steuern, wie es für die Zubereitung des jeweils ausgewählten Getränkes notwendig ist. Die Steuereinrichtung 18 umfasst einen Mikrocontroller uC mit einem zugeordneten Speicher MEM.

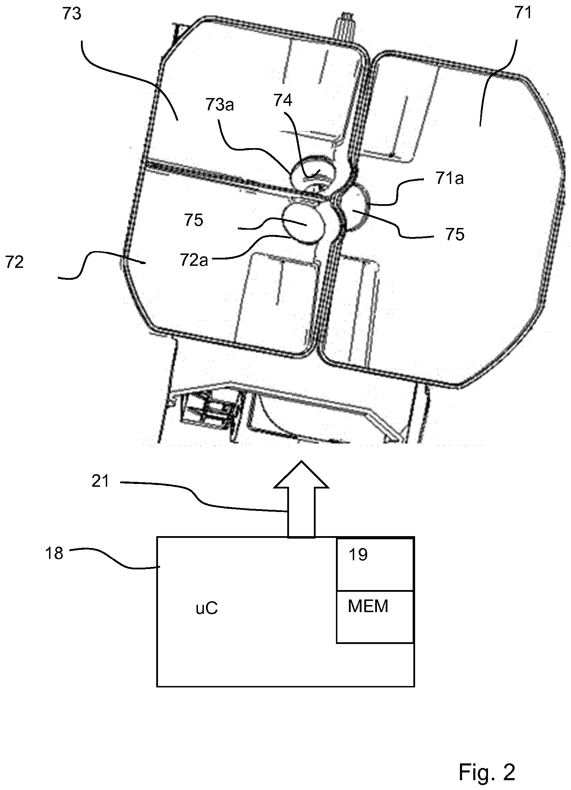

Aus der Darstellung in Fig. 2 ist als Detailansicht die Anordnung mit drei Vorratsbehältern 71, 72, 73 zur Aufnahme unterschiedlicher pflanzlicher Produkte, wobei es sich im vorliegenden Fall um verschiedene Kaffeesorten handelt, gezeigt. Unterhalb der Vorratsbehälter 71, 72, 73 befinden sich die Zuführungseinheit 74 und ein Verschlussmittel 75, durch die jeweils die an der Unterseite befindliche Öffnung 71a, 72a, 73a eines einzigen, ausgewählten Vorratsbehälters 71, 72, 73 geöffnet wird, um die darin befindliche Kaffeesorte dem darunterliegenden Mahlwerk 70 bzw. Brühkammer 41 mittels Schwerkraft zuzuführen. Die in dem Mahlwerk 70 zu einem Pulver verarbeiteten Kaffeebohnen gelangen im Anschluss daran in die Brühkammer 41 der Brüheinheit 40. Die Zuführungseinheit 74 dient somit zur Aktivierung des ausgewählten Behälters 71, 72, 73, sodass die darin befindlichen Bohnen in der vorbestimmten Menge unter Wirkung der Schwerkraft in das Mahlwerk 70 gelangen. Insgesamt beziehen sich alle Richtungs- und Positionsangaben auf die betriebsgemäße Aufstellposition des Kaffeeautomaten 1. In Fig. 2 ist ferner schematisch die Steuereinrichtung 18 gezeigt, die einen Mikrocontroller uC umfasst. Ferner ist dem Mikrocontroller uC ein Speicher MEM und die Zuordnungseinheit 19 zugeordnet oder integriert. Der Speicher MEM beinhaltet Programmcode, welcher zum Durchführen der Abläufe zum Zubereiten eines Getränks durch den Mikrocontroller uC ausgebildet ist. Hierzu werden die Aktoren, wie Pumpe 8, Heizung 7, Ventilanordnung 3, und das Mahlwerk 70 mit Hilfe des Mikrocontrollers uC entsprechend aktiviert und deaktiviert. Die Verbindung ist zu den Aktoren mit der Signalverbindung 21 skizziert.

Der Mikrocontroller uC bzw. die Steuereinrichtung 18 ist ferner dazu eingerichtet oder programmiert, die Zuführungseinheit 74 mit dem Verschlussmittel 75 zu steuern, derart, dass sich ein vorgegebenes Mischungsverhältnis der Bohnen aus den mehreren Vorratsbehältern 71, 72, 73 ergibt. Die Festlegung der einzelnen Anteile, welche Teilmenge aus den einzelnen Vorratsbehältern 71, 72, 73 dem Mahlwerk 70 bzw. der Brühkammer 41 zugeführt werden, geschieht mittels der Zuordnungseinheit 19. Die Zuordnungseinheit 19 ist dabei bevorzugt als Programmcode im Speicher MEM untergebracht und entfaltet ihre Funktion dann, wenn dieser Programmteil im Mikrocontroller uC abläuft. Die Zuordnungseinheit 19 ist bevorzugt als Tabelle ausgebildet, welche die Teilmengen an Bohnen aus den verschiedenen Vorratsbehältern 71, 72, 73 anhand der Zielvorgabe für das fertige, aufgebrühte Getränk festlegt. In einer anderen, bevorzugten Ausführung ist die Zuordnungseinheit 19 als mathematisches Modell ausgebildet. In dieser Ausführung sind Berechnungsalgorithmen oder numerisch abgebildete Kennlinien im Speicher MEM abgespeichert.

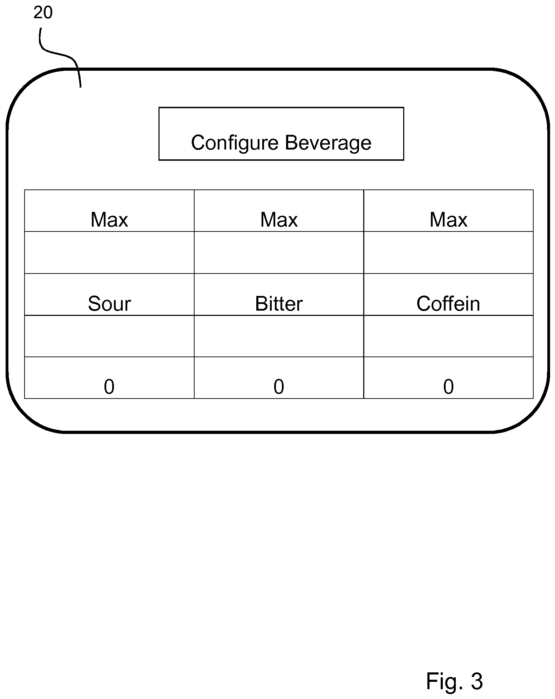

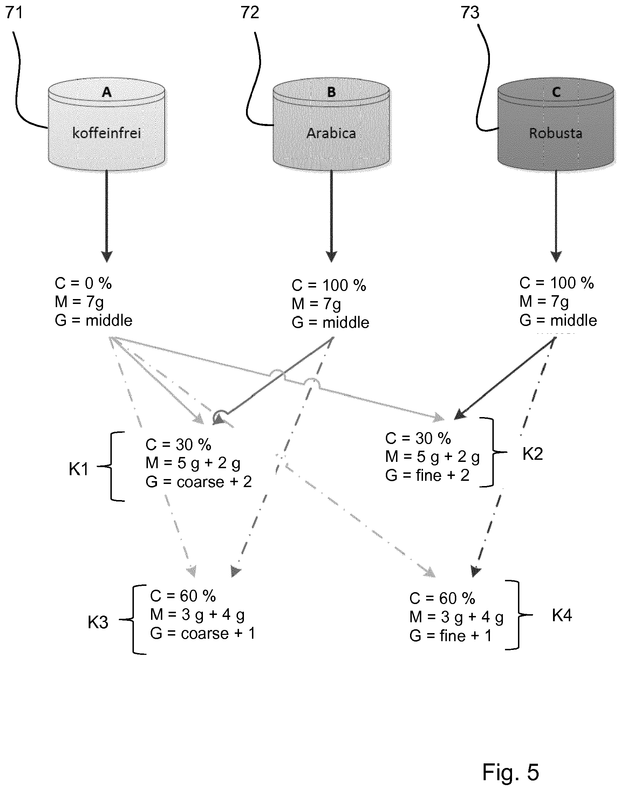

Fig. 3 zeigt schematisch eine Darstellung der Bedienvorrichtung 20 zum Konfigurieren eines Getränks. Die Bedienvorrichtung 20 ist in dem gezeigten Beispiel als Berührbildschirm ausgeführt. Bei der Aktivierung der Funktion "Configure Beverage" werden die verschiedenen sensorischen Eigenschaften und der Koffeingehalt zur Auswahl bzw. zur Veränderung angeboten. In dem Beispiel kann der Geschmacksanteil Sauer, Bitter und der Koffeingehalt in Stufen durch Berührung auf eine der angebotenen Berührflächen ausgewählt werden. Nach erfolgter Auswahl werden die Bohnenanteile und der Mahlgrad entsprechend festgelegt, wie es in dem Zuordnungsablauf gemäß Fig. 5 skizziert ist.

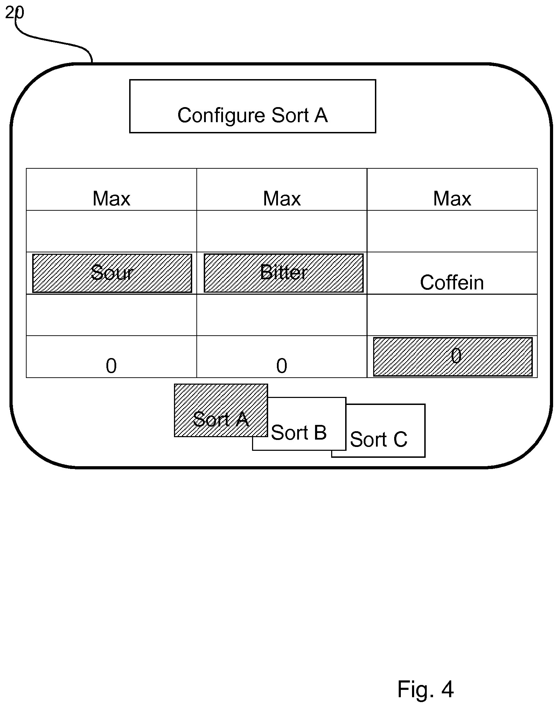

Fig. 4 zeigt schematisch eine Darstellung des Menues für die Initialisierung der Vorratsbehälter 71, 72, 73 für die verschiedenen Bohnensorten. Dabei kann die Einstellung oder Konfiguration für den ersten Behälter 71 durch das Aktivieren der Schaltfläche "Sort A", die Bohnensorte für den zweiten Behälter 72 durch das Aktivieren der Schaltfläche "Sort B" und die Bohnensorte für den dritten Behälter 73 durch das Aktivieren der Schaltfläche "Sort C" ausgewählt werden. Anschließend werden die Parameter der einzufüllenden oder eingefüllten Bohnen zur Einstellung angeboten. In dem dargestellten Beispiel ist im ersten Behälter 71 eine koffeinfreie Bohnensorte mit ausgewogenem Geschmack eingefüllt. Die Eigenschaften bzw. Bohnenparameter für die anderen Vorratsbehälter 72, 72 müssen entsprechend den eingefüllten Bohnensorten eingegeben werden.

Fig. 5 zeigt den Ablauf für verschieden konfigurierte Getränke. Im Behälter 71 befindet sich die Bohnensorte A, "koffeinfrei". Behälter 72 beinhaltet die Sorte B "Arabica", Behälter 73 die Bohnensorte C "Robusta". Als Referenzparameter ist für die Sorte A der Koffeingehalt C = 0%, eingestellt, als Mahlgrad G der mittlere Wert. Als Gesamtmenge für eine Getränkeportion ist M = 7 Gramm eingestellt. Als Referenzparameter ist für die Sorte B der Koffeingehalt C = 100%, eingestellt, als Mahlgrad G der mittlere Wert. Als Gesamtmenge für eine Getränkeportion ist M = 7 Gramm eingestellt. Als Referenzparameter ist für die Sorte C der Koffeingehalt C = 100%, eingestellt, als Mahlgrad G der mittlere Wert. Als Gesamtmenge für eine Getränkeportion ist M = 7 Gramm eingestellt. Hierbei ist anzumerken, dass als Maß für den Koffeingehalt die tatsächliche Konzentration in mg / Kg eingestellt werden kann, weil verschiedene Kaffeesorten sich auch im Koffeingehalt unterscheiden.

Als Auswahl des Kaffeegetränks K1 ist eine Geschmacksrichtung gewählt, die der einer Arabica-Sorte entspricht, jedoch mit einem geringerem Koffeingehalt, hier nur 30 % einer Arabica-Sorte, aufweist. Zuvor hat der Benutzer seine bevorzugten Geschmacksparameter und den Koffeingehalt mittels der Bedienvorrichtung 20 eingegeben, wobei ein erhöhter Anteil "Sauer" und ein verminderter Anteil "Bitter" eingegeben wurden. Damit wurde in etwa die Geschmacksentfaltung der Sorte "Arabica" bezeichnet oder beschrieben. Nun kommt die Zuordnungseinheit 19 zum Einsatz, die aus diesen Vorgaben das Mischungsverhältnis und den Mahlgrad für die nachfolgende Kaffeezubereitung festlegt. Für das zuvor definierte Kaffeegetränk K1 werden 5 Gramm aus dem Vorratsbehälter 71 mit der koffeinfreien Sorte und 2 Gramm aus dem Bohnenbehälter 72 (Sorte B=Arabica) festgelegt. Als Mahlgrad wird eine Grobkörnigkeit um zwei Stufen gröber als die Grundeinstellung festgelegt.

Als Auswahl des Kaffeegetränks K2 ist eine Geschmacksrichtung gewählt, die der einer Robusta-Sorte entspricht, jedoch mit einem geringerem Koffeingehalt, hier nur 30 % einer Robusta-Sorte, aufweist. Zuvor hat der Benutzer seine bevorzugten Geschmacksparameter und den Koffeingehalt mittels der Bedienvorrichtung 20 eingegeben, wobei ein erhöhter Anteil "Bitter" und ein verminderter Anteil "Sauer" eingegeben wurden. Damit wurde in etwa die Geschmacksentfaltung der Sorte "Robusta" bezeichnet oder beschrieben. Nun kommt die Zuordnungseinheit 19 zum Einsatz, die aus diesen Vorgaben das Mischungsverhältnis und den Mahlgrad für die nachfolgende Kaffeezubereitung festlegt. Für das zuvor definierte Kaffeegetränk K1 werden 5 Gramm aus dem Vorratsbehälter 71 mit der koffeinfreien Sorte und 2 Gramm aus dem Bohnenbehälter 73 (Sorte C = Robusta) festgelegt. Als Mahlgrad wird eine Feinkörnigkeit um zwei Stufen feiner als die Grundeinstellung festgelegt.

Als Auswahl des Kaffeegetränks K3 ist eine Geschmacksrichtung gewählt, die der einer Arabica-Sorte entspricht, jedoch mit einem etwas geringerem Koffeingehalt, welcher hier 60 % einer Arabica-Sorte, aufweist. Zuvor hat der Benutzer seine bevorzugten Geschmacksparameter und den Koffeingehalt mittels der Bedienvorrichtung 20 eingegeben, wobei ein erhöhter Anteil "Sauer" und ein verminderter Anteil "Bitter" eingegeben wurden. Damit wurde in etwa die Geschmacksentfaltung der Sorte "Arabica" bezeichnet oder beschrieben. Nun kommt die Zuordnungseinheit 19 zum Einsatz, die aus diesen Vorgaben das Mischungsverhältnis und den Mahlgrad für die nachfolgende Kaffeezubereitung festlegt. Für das zuvor definierte Kaffeegetränk K1 werden M=3 Gramm aus dem Vorratsbehälter 71 mit der koffeinfreien Sorte und M=4 Gramm aus dem Bohnenbehälter 72 mit der Sorte "Arabica" festgelegt. Als Mahlgrad wird eine Grobkörnigkeit um eine Stufe gröber als die Grundeinstellung festgelegt.

Als Auswahl des Kaffeegetränks K4 ist eine Geschmacksrichtung gewählt, die der einer Robusta-Sorte entspricht, jedoch mit einem etwas geringerem Koffeingehalt, welcher hier 60 % einer Robusta-Sorte, aufweist. Zuvor hat der Benutzer seine bevorzugten Geschmacksparameter und den Koffeingehalt mittels der Bedienvorrichtung 20 eingegeben, wobei ein erhöhter Anteil "Bitter" und ein verminderter Anteil "Sauer" eingegeben wurden. Damit wurde in etwa die Geschmacksentfaltung der Sorte "Robusta" bezeichnet oder beschrieben. Nun kommt die Zuordnungseinheit 19 zum Einsatz, die aus diesen Vorgaben das Mischungsverhältnis und den Mahlgrad für die nachfolgende Kaffeezubereitung festlegt. Für das zuvor definierte Kaffeegetränk K4 werden M=3 Gramm aus dem Vorratsbehälter 71 mit der koffeinfreien Sorte und M=4 Gramm aus dem Bohnenbehälter 73 mit der Sorte "Robusta" festgelegt. Als Mahlgrad wird eine Feinkörnigkeit um eine Stufe feiner als die Grundeinstellung festgelegt.

## Patentansprüche

1. Kaffeeautomat mit einem Strömungsleitungssystem (2) mit einer Wasserzuführung (14), einer Pumpe (8), einer Ventileinrichtung (3) zum Steuern der Strömungswege, einem Durchlauferhitzer (7) und zumindest einer Auslaufdüse (21, 22);
- einer Brühkammer (41);
- zumindest zwei Vorratsbehältern (71, 72) zum Bereithalten von verschiedenen Sorten Trockensubstanz;
- einer Zuführungseinheit (74) zum selektiven Zuführen der Trockensubstanz aus den Vorratsbehältern (71, 72) in die Brühkammer (41):
- einer Steuereinrichtung (18, uC) zum Aktivieren und Deaktivieren der Pumpe (8), der Ventileinrichtung (3) und des Durchlauferhitzers (7) derart, um ein Aufbrühen der Trockensubstanz und die Herstellung eines Getränks zu bewirken,
wobei die Steuereinrichtung (18, uC) folgendes umfasst:
- einen Speicher (MEM) zum Abspeichern von
spezifischen Parametern für zwei oder mehrere Bohnensorten (A, B, C) und von spezifischen Getränkeparametern für ein ausgewähltes oder konfiguriertes Getränk; wobei
die Steuereinrichtung (18, uC) eine Zuordnungseinheit (19) umfasst, welche wie folgt eingerichtet ist:
- eine vorgegebene Gesamtmenge Trockensubstanz festzulegen;
- einen ersten Anteil (M) für die Zugabe einer ersten Bohnensorte (A, B, C) festzulegen;
- einen zweiten Anteil für die Zugabe einer zweiten Bohnensorte (A, B, C) festzulegen;
wobei die Zuordnungseinheit (19) derart eingerichtet oder programmiert ist, dass sich der erste Anteil und der zweite Anteil in Abhängigkeit der vorgegebenen spezifischen Getränkeparameter des konfigurierten Getränks ergibt, um die Zuführungseinheit (74) zum Zuführen der Bohnensorten in der Menge entsprechend ihres jeweils festgelegten Anteils (M) in die Brühkammer (42) zu steuern,
**dadurch gekennzeichnet,**
**dass** die Bohnenparameter in einem Initialisierungsmodus mittels einer Bedienvorrichtung durch den Anwender (20) eingebbar und im Speicher (MEM) abspeicherbar sind .

2. Kaffeeautomat nach Anspruch 1,
**dadurch gekennzeichnet,**
**dass** das Zuführungseinheit (74) ein jeweils den Vorratsbehältern (71, 72, 73) zugeordnetes, steuerbares Verschlussmittel (75) an den Auslässen (71a, 72a, 73a) umfasst.

3. Kaffeeautomat nach Anspruch 1,
**dadurch gekennzeichnet,**
**dass** die Zuführungseinheit (74) ein jeweils den Vorratsbehältern (71, 72, 73) zugeordnetes, steuerbares Mahlwerk (70) umfasst.

4. Kaffeeautomat nach einem der Ansprüche 1 bis 3,
**dadurch gekennzeichnet,**
**dass** ferner für jede Bohnensorte (A, B, C) ein jeweils individueller Mahlgrad (G) festgelegt ist, wobei der Mahlgrad (G) in Abhängigkeit der vorgegebenen spezifischen Getränkeparameter für jede der zuzuführenden Bohnensorte (A, B, C) jeweils individuell veränderbar ist.

5. Kaffeeautomat nach einem der Ansprüche 1 bis 4,
**dadurch gekennzeichnet,**
**dass** spezifische Bohnenparameter wie Koffeingehalt (C), Säure, Bitterkeit und Körperfülle und Mahlgrad (G) als Kennzahl im Speicher (MEM) abgelegt sind.

6. Kaffeeautomat nach einem der Ansprüche 1 bis 4,
**dadurch gekennzeichnet,**
**dass** die Getränkeparameter in einem Konfigurationsmodus vor einem Getränkebezug festlegbar sind.

7. Kaffeeautomat nach Anspruch 6,
**dadurch gekennzeichnet,**
**dass** die Getränkeparameter wahlweise im Speicher (MEM) abgespeichert werden können, und mittels einer festgelegten Auswahlkennung für einen Getränkebezug aktivierbar sind.

8. Kaffeeautomat nach einem der Ansprüche 1, 6 oder 7,
**dadurch gekennzeichnet,**
**dass** zumindest ein Getränkeparameter ein Maß für Gesamtmenge, den Koffeingehalt (C), die Stärke, die Bitterkeit, das Geschmacksempfinden Sauer und/oder die Körperfülle des fertigen Getränks beinhaltet.

9. Kaffeeautomat nach einem der Ansprüche 1 bis 8,
**gekennzeichnet durch**
drei oder mehrere Vorratsbehälter (71, 72, 73), wobei für jeden der Vorratsbehälter(71, 72, 73) jeweils spezifische Bohnenparameter einstellbar und abspeicherbar sind, die zur Herstellung eines mittels Getränkeparametern konfigurierten Getränks dienen.

10. Kaffeeautomat nach einem der Ansprüche 1 bis 9,
**dadurch gekennzeichnet,**
**dass** der Speicher (MEM) eine Tabelle umfasst, welche die Bohnenparameter und die dazugehörigen Vorratsbehälter (71, 72, 73) bezeichnet, eine weitere Tabelle mit zumindest den ausgewählten Getränkeparametern, wobei die durch die Zuordnungseinheit (74) vorgenommene Auswahl der einzelnen Vorratsbehälter (71, 72, 73,) mit Hilfe einer Zuordnungstabelle oder eines mathematischen Modells erfolgt, damit die Steuereinrichtung (18, uC) mittels der bereitgestellten Auswahl die Zuführungseinheit (74) entsprechend zur nachfolgenden Getränkezubereitung steuern kann.

## Claims

1. Coffee machine comprising a flow line system (2) having a water supply (14), a pump (8), a valve device (3) for controlling the flow paths, a continuous-flow heater (7) and at least one outlet nozzle (21, 22);
- a brewing chamber (41);
- at least two storage containers (71, 72) for keeping different types of dry substance available, which substance consists of coffee beans;
- a supply unit (74) for selectively supplying the dry substance from the storage containers (71, 72) into the brewing chamber (41);
- a control device (18, uC) for activating and deactivating the pump (8), the valve device (3) and the continuous-flow heater (7) in such a way as to cause the dry substance to be brewed and a beverage to be produced,
the control device (18, uC) comprising the following:
- a memory (MEM) for storing
specific parameters for two or more bean types (A, B, C) and
specific beverage parameters for a selected or configured beverage;
the control device (18, uC) comprising an assignment unit (19) which is configured as follows:
- to determine a specified total amount of dry substance;
- to determine a first proportion (M) for the addition of a first bean type (A, B, C);
- to determine a second proportion for the addition of a second bean type (A, B, C);
the assignment unit (19) being configured or programmed in such a way that the first proportion and the second proportion result on the basis of the specified specific beverage parameters of the configured beverage, in order to control the supply unit (74) for supplying the beans with the quantity corresponding to their determined proportion (M) in the brewing chamber (42),
**characterised in that**
the bean parameters can be entered by the user (20) in an initialisation mode by means of an operating device and can be stored in the memory (MEM).

2. Coffee machine according to claim 1,
**characterised in that**
the supply unit (74) comprises a controllable closure means (75) at the outlets (71a, 72a, 73a) which is assigned to each of the storage containers (71, 72, 73).

3. Coffee machine according to claim 1,
**characterised in that**
the supply unit (74) comprises a controllable grinder (70) which is assigned to each of the storage containers (71, 72, 73).

4. Coffee machine according to any of claims 1 to 3,
**characterised in that**
an individual degree of grinding (G) is also determined for each bean type (A, B, C), it being possible to change the degree of grinding (G) individually on the basis of the specified specific beverage parameters for each bean type (A, B, C) to be supplied.

5. Coffee machine according to any of claims 1 to 4,
**characterised in that**
specific bean parameters such as caffeine content (C), acidity, bitterness and fullness and degree of grinding (G) are stored as a characteristic value in the memory (MEM).

6. Coffee machine according to any of claims 1 to 4,
**characterised in that**
the beverage parameters can be determined in a configuration mode before a beverage order.

7. Coffee machine according to claim 6,
**characterised in that**
the beverage parameters can optionally be stored in the memory (MEM) and can be activated by means of a determined selection identifier for a beverage order.

8. Coffee machine according to any of claims 1, 6 or 7,
**characterised in that**
at least one beverage parameter includes a measure of the total quantity, the caffeine content (C), the strength, the bitterness, the sour taste sensation and/or the fullness of the finished beverage.

9. Coffee machine according to any of claims 1 to 8,
**characterised by**
three or more storage containers (71, 72, 73), specific bean parameters being adjustable and storable for each of the storage containers (71, 72, 73), which parameters are used to produce a beverage configured by means of beverage parameters.

10. Coffee machine according to any of claims 1 to 9,
**characterised in that**
the memory (MEM) comprises a table which designates the bean parameters and the associated storage containers (71, 72, 73), and a further table having at least the selected beverage parameters, the selection of individual storage containers (71, 72, 73) by the assignment unit (74) taking place by means of an assignment table or a mathematical model, so that the control device (18, uC) can control the supply unit (74) accordingly for the subsequent beverage preparation by means of the selection provided.

## Revendications

1. Machine à café automatique comportant
un système de conduite d'écoulement (2) comportant une alimentation en eau (14), une pompe (8), un dispositif de soupape (3) permettant de commander les trajets d'écoulement, un chauffe-eau instantané (7) et au moins une buse de sortie (21, 22) ;
- une chambre d'infusion (41) ;
- au moins deux récipients de stockage (71, 72) permettant de contenir différents types de substance sèche, laquelle se compose de grains de café ;
- une unité d'alimentation (74) permettant d'alimenter sélectivement la substance sèche depuis les récipients de stockage (71, 72) vers la chambre d'infusion (41) ;
- un dispositif de commande (18, uC) permettant d'activer et de désactiver la pompe (8), le dispositif de soupape (3) et le chauffe-eau instantané (7) de manière à provoquer l'infusion de la substance sèche et la production d'une boisson,
dans laquelle le dispositif de commande (18, uC) comprend :
- une mémoire (MEM) permettant de stocker des paramètres spécifiques pour deux types de grains (A, B, C) ou plus et des paramètres de boisson spécifiques pour une boisson sélectionnée ou configurée ;
dans laquelle
le dispositif de commande (18, uC) comprend une unité d'attribution (19), laquelle est configurée pour :
- définir une quantité totale prédéterminée de matière sèche ;
- définir une première proportion (M) pour l'ajout d'un premier type de grain (A, B, C) ;
- définir une seconde proportion pour l'ajout d'un second type de grain (A, B, C) ;
dans laquelle l'unité d'attribution (19) est configurée ou programmée de telle manière que la première proportion et la seconde proportion résultent en fonction des paramètres de boisson spécifiques prédéterminés de la boisson configurée, afin de commander l'unité d'alimentation (74) pour l'alimentation des grains dans la chambre d'infusion (42) selon la quantité correspondant à leur proportion (M) respective définie,
**caractérisée en ce**
**que** les paramètres de grains peuvent être entrés par l'utilisateur (20) dans un mode d'initialisation au moyen d'un appareil d'emploi et peuvent être stockés dans la mémoire (MEM).

2. Machine à café automatique selon la revendication 1,
**caractérisée en ce**
**que** l'unité d'alimentation (74) comprend, au niveau des sorties (71a, 72a, 73a), un moyen de fermeture (75) commandable respectivement attribué aux récipients de stockage (71, 72, 73).

3. Machine à café automatique selon la revendication 1,
**caractérisée en ce**
**que** l'unité d'alimentation (74) comprend un broyeur (70) commandable respectivement attribué aux récipients de stockage (71, 72, 73).

4. Machine à café automatique selon l'une des revendications 1 à 3,
**caractérisée en ce**
**qu'**un degré de broyage (G) individuel respectif est défini pour chaque type de grain (A, B, C), le degré de broyage (G) pouvant être modifié individuellement respectivement en fonction des paramètres de boisson spécifiques prédéterminés pour chaque type de grain (A, B, C) à alimenter.

5. Machine à café automatique selon l'une des revendications 1 à 4,
**caractérisée en ce**
**que** les paramètres de grain spécifiques tels que la teneur en caféine (C), l'acidité, l'amertume et la plénitude et le degré de broyage (G) sont stockés en tant qu'indicateur dans la mémoire (MEM).

6. Machine à café automatique selon l'une des revendications 1 à 4,
**caractérisée en ce**
**que** les paramètres de boisson peuvent être définis dans un mode de configuration avant un achat de boisson.

7. Machine à café automatique selon la revendication 6,
**caractérisée en ce**
**que** les paramètres de boisson peuvent être sélectivement stockés dans la mémoire (MEM) et peuvent être activés au moyen d'un identifiant de sélection défini pour un achat de boisson.

8. Machine à café automatique selon l'une des revendications 1, 6 ou 7,
**caractérisée en ce**
**qu'**au moins un paramètre de boisson comprend une mesure de la quantité totale, de la teneur en caféine (C), de la force, de l'amertume, de la sensation de goût aigre et/ou de la plénitude de la boisson prête.

9. Machine à café automatique selon l'une des revendications 1 à 8,
**caractérisée par**
trois récipients de stockage (71, 72, 73) ou plus, des paramètres de grains spécifiques pouvant être réglés et stockés respectivement pour chaque récipient de stockage (71, 72, 73) et étant utilisés pour préparer une boisson configurée au moyen de paramètres de boisson.

10. Machine à café automatique selon l'une des revendications 1 à 9,
**caractérisée en ce**
**que** la mémoire (MEM) comprend un tableau qui désigne les paramètres de grains et les récipients de stockage (71, 72, 73) associés, un autre tableau comportant au moins les paramètres de boisson sélectionnés, la sélection des récipients de stockage (71, 72, 73) individuels effectuée grâce à une unité d'attribution (74) ayant lieu à l'aide d'un tableau d'attribution ou d'un modèle mathématique, de sorte que le dispositif de commande (18, uC) peut commander l'unité d'alimentation (74) en conséquence pour la préparation de boisson suivante au moyen de la sélection fournie.
